# FASCICULE DE BREVET EUROPEEN

(11) **EP 0 809 760 B1**
(45) Date de publication et mention de la délivrance du brevet: **24.11.1999**
(21) Numéro de dépôt: 96903068.3
(22) Date de dépôt: 07.02.1996
(51) Int. Cl.: F16B 23/00, B25B 15/00, F16D 1/10

(54) **ACCOUPLEMENT SEPARABLE, ET OUTIL CORRESPONDANT**
TRENNBARE KUPPLUNG UND ENTSPRECHENDES WERKZEUG
RELEASABLE COUPLING AND TOOL THEREFOR

(30) Priorité: 14.02.1995 FR 9501675
(43) Date de publication de la demande: 03.12.1997
(73) Titulaire: FACOM, Société dite:, 91423 Morangis Cédex (FR)
(72) Inventeur: BOZONNET, Daniel, F-58000 Nevers (FR)
(74) Mandataire: Jacobson, Claude
(86) Numéro de dépôt international: FR9600206
(87) Numéro de publication internationale: WO9625603

(56) Documents cités:
- EP-A- 0 236 630
- FR-A- 1 562 074
- GB-A- 2 260 587
- US-A- 4 361 412
- US-A- 4 625 599
- US-A- 4 842 467
- US-A- 4 930 378

## Description

La présente invention est relative à un profil cannelé d'accouplement séparable entre une pièce mâle et une pièce femelle qui appartiennent notamment à un outil d'entraînement en rotation d'une vis ou d'un écrou, du type décrit dans le préambule de la revendication 1 (US 4 361 412 A).

Les accouplements actuels utilisent le plus souvent un carré d'entraînement mâle et un carré d'entraînement femelle conjugués, définis par exemple par la norme ISO 1174. Le carré mâle est généralement solidaire de la tête de l'outil et peut s'emboîter dans le carré femelle d'une douille ayant, à son extrémité opposée, un profil d'entraînement adapté aux vis ou aux écrous à serrer ou à desserrer. Cette douille peut faire partie d'une famille de douilles associées à la dimension du carré d'entraînement considéré. Le carré mâle peut, en variante, s'emboîter dans le carré femelle d'autres organes tels qu'une rallonge, un cardan, etc.

Les dimensions normalisées des carrés d'entraînement correspondent à des côtés de 6,35 mm (1/4), 9,52 mm (3/8), 12,70 mm (1/2), etc. Pour un carré donné, correspondant à un encombrement donné de l'outil, on ne peut obtenir qu'un couple limité par la résistance mécanique du carré mâle. Ceci limite beaucoup la gamme de douilles utilisables, d'autant plus que pour un organe fileté donné, le couple à fournir au desserrage est très largement supérieur au couple nominal de serrage, dans une mesure largement aléatoire due notamment à la corrosion.

Par suite, si l'on a besoin d'un couple supérieur à la capacité du carré mâle, il faut changer d'outil et utiliser le carré de dimension supérieure. Ceci suppose que l'on dispose de plusieurs outils et de plusieurs boîtes de douilles, et conduit à utiliser un outillage plus lourd, plus encombrant et plus coûteux.

Diverses propositions ont été faites pour augmenter le couple disponible avec un outil donné et avec une dureté d'acier déterminée. Cependant, il s'agit généralement d'utiliser des formes dérivées d'un hexagone (FR-A-1 560 270 et 2 682 727, US-A-4 512 220, 4 361 412 et 4 930 378, EP-A-0 458 771), qui présentent l'inconvénient d'être incompatibles avec un carré mâle normalisé.

De plus, les profils connus ne sont généralement pas adaptés pour être équipés de façon satisfaisante d'une bille de verrouillage chargée par un ressort (en ce qui concerne le profil mâle) ou d'un évidement de réception d'une telle bille (pour le profil femelle).

L'invention a pour but de fournir un accouplement compatible avec un carré mâle normalisé et permettant, pour un encombrement donné, d'obtenir un couple nettement supérieur à celui correspondant audit carré, tout en pouvant être équipé de façon efficace d'un dispositif de verrouillage à bille compatible avec celui de ce carré.

A cet effet, l'invention a pour objet un profil cannelé d'accouplement du type précité, caractérisé par la partie caractérisante de la revendication 1.

Le dispositif suivant l'invention peut comporter une ou plusieurs des caractéristiques décrites dans les revendications 2 à 13.

L'invention a également pour objet un outil d'entraînement en rotation d'une vis ou d'un écrou, manuel ou énergisé, suivant la revendication 14.

D'autres caractéristiques d'un tel outil sont décrites dans les revendications 15 à 17.

Des exemples de réalisation de l'invention vont maintenant être décrits en regard des dessins annexés, sur lesquels :
- la Figure 1 représente en coupe transversale un accouplement suivant l'invention;
- la Figure 2 est une vue de côté des deux pièces de cet accouplement et d'une vis qu'elles sont destinées à actionner;
- la Figure 3 est une vue en bout de l'embout correspondante;
- la Figure 4 est une vue en bout de la douille du même accouplement;
- la Figure 5 est une vue partielle d'une variante du profil mâle;
- la Figure 6 est une vue partielle d'une variante associée du profil femelle;
- la Figure 7 est une vue partielle d'une autre variante du profil femelle;
- la Figure 8 représente un agencement facilitant l'introduction du profil mâle dans le profil femelle;
- la Figure 9 montre une variante du profil femelle de la Figure 8;
- la Figure 10 est une vue latérale partielle d'une rallonge angulaire ayant un profil mâle suivant l'invention;
- la Figure 11 est une vue en bout, suivant la flèche XI de la Figure 10; et
- les Figures 12 et 13 sont des vues, analogues respectivement aux Figures 10 et 11, d'une variante.

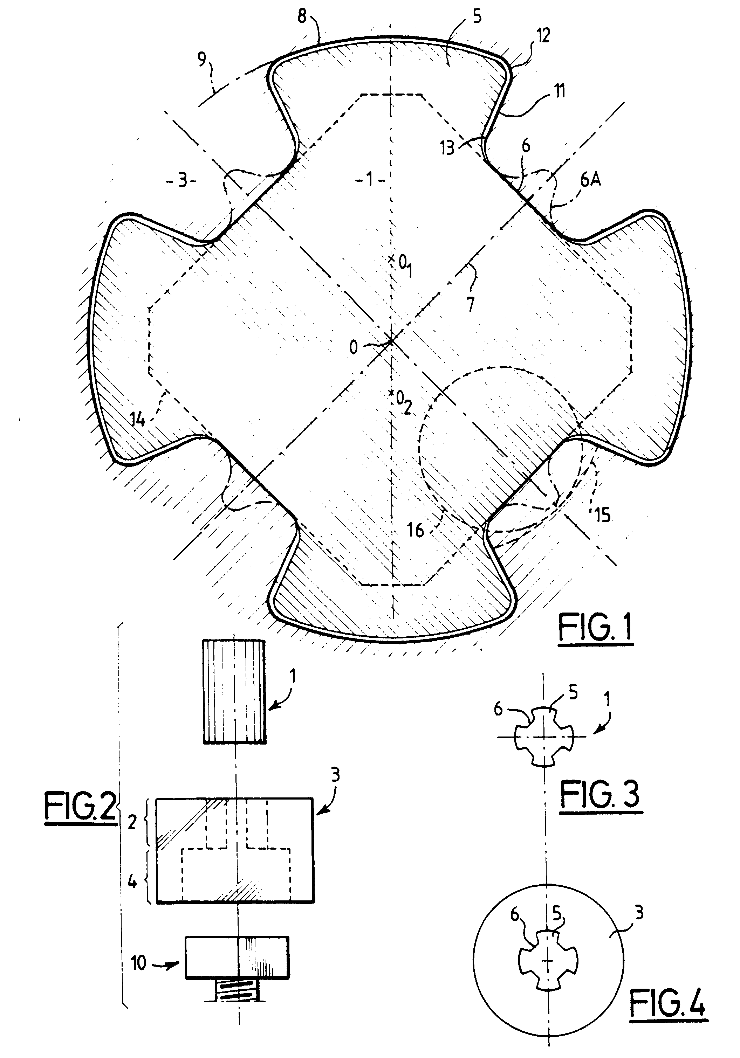

On a représenté à la Figure 1 le profil, en section transversale, d'un embout mâle d'entraînement 1 représenté aux Figures 2 et 3, ainsi que le profil conjugué, aux jeux fonctionnels près, de la partie d'entraînement 2 d'une douille 3 représentée aux Figures 2 et 4. L'extrémité proximale de l'embout est, en service, solidaire de la tête d'un outil d'entraînement non représenté, par exemple d'un cliquet, d'une rallonge ou de tout autre accessoire, et la douille 3 comporte à l'opposé de sa partie 2 une partie de travail 4 ayant un profil femelle quelconque connu (hexagonal, "TORX", etc.) destiné à venir en prise avec un organe fileté conjugué 10 (Figure 2) à entraîner en rotation, tel qu'une vis, un écrou, un taraud, etc. Le profil représenté est constant sur toute sa hauteur utile. Les pièces 1 et 3 ont des duretés relativement élevées et voisines l'une de l'autre, typiquement de l'ordre de 40 à 50 HRC.

Chacun des profils mâle et femelle a la forme générale d'une croix à symétrie axiale et comporte quatre cannelures 5 identiques, situées à 90° les unes des autres par rapport au centre O du profil, ainsi que quatre segments de droite intermédiaires 6. La médiatrice 7 de chaque segment 6 passe par le centre O. Les cannelures 5 sont définies extérieurement par un arc de cercle 8, les quatre arcs appartenant à un même cercle 9 centré en O, et elles sont délimitées latéralement par deux segments de droite 11 orientés à peu près radialement. En ce qui concerne le profil femelle, des arrondis concaves 12 sont reliés tangentiellement aux arcs 8 et aux segments 11, et des arrondis convexes 13 sont reliés tangentiellement à ces segments 11 ainsi qu'aux segments 6 adjacents.

Les quatre segments 6 du profil femelle sont agencés de manière à circonscrire, aux jeux fonctionnels près, un carré mâle normalisé 14 représenté en traits interrompus. De plus, chacune des faces planes du profil femelle comporte, sur toute la longueur des segments 6 et à une hauteur prédéterminée, un évidement 15 de réception d'une bille de verrouillage 16 chargé par un ressort, en saillie sur une face plane du profil mâle. La position en hauteur de l'évidement 15 est adaptée pour recevoir également la bille de verrouillage du carré mâle normalisé 14. En variante, la bille 16 peut être remplacée par un plongeur à extrémité sphérique (non représenté).

Si l'on compare le profil mâle et le carré 14, on constate que le premier possède un module d'inertie polaire (ou module de résistance polaire) par rapport au centre O nettement supérieur, ce qui permet d'obtenir des couples nettement supérieurs. De plus, la forme des cannelures 5 leur permet de supporter de tels couples élevés, et l'orientation sensiblement radiale des segments 11 a pour résultat que le couple appliqué à l'outil est transmis sans perte notable au profil femelle, des segments 11 du profil mâle à ceux du profil femelle.

En variante, les prolongements des segments 11 peuvent passer d'un côté ou de l'autre du point O. La transmission du couple développe alors une composante de force centrifuge ou centripète.

En variante également, les arcs de cercle 8 peuvent être centrés sur d'autres points des axes de symétrie des cannelures correspondantes, situés plus près (point 01) ou plus loin (point 02) que le point 0.

En variante encore, comme indiqué en trait mixte à la Figure 1, la partie centrale de chaque segment 6 du profil femelle peut être évidée en 6A. Cet évidement peut concerner pratiquement toute la longueur du segment 6, mais, si l'on utilise un verrouillage à bille, il doit s'inscrire dans l'évidement 15, comme illustré.

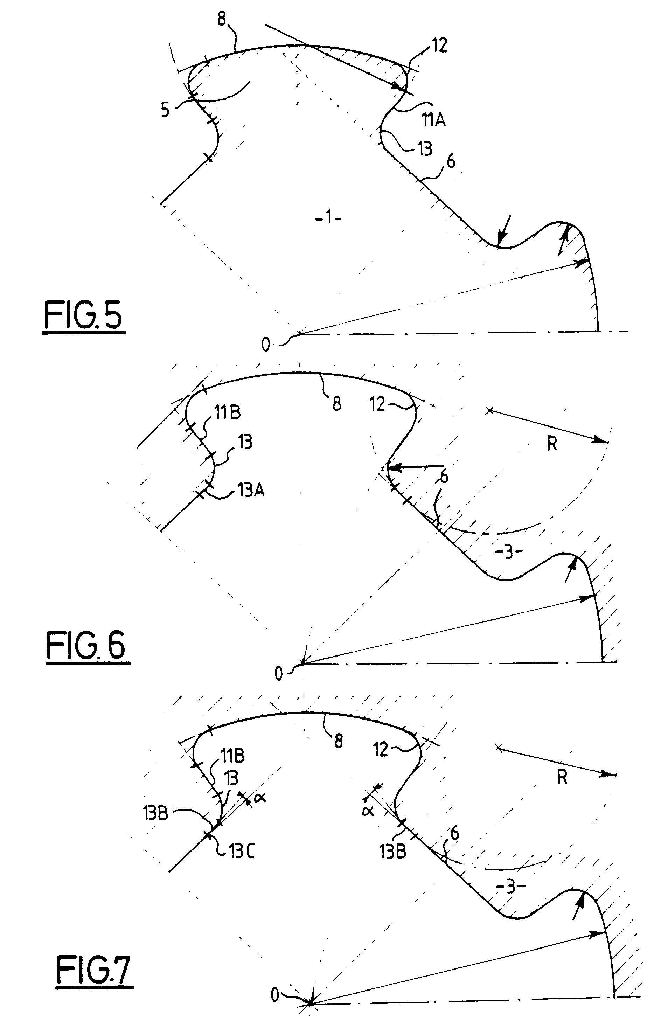

Dans la variante des Figures 5 et 6, le profil mâle (Figure 5) est modifié par le fait que les segments de droite 11 sont remplacés par des arcs de cercle convexes 11A. Quant au profil femelle (Figure 6), il est modifié sous deux aspects : d'une part, ses segments de droite 11 sont remplacés par des arcs de cercle convexes 11B, de rayon supérieur à celui des arcs de cercle 11A. D'autre part, un arc de cercle convexe 13A de grand rayon R est interposé entre chaque extrémité de chaque segment de droite 6 et l'arrondi 13 adjacent et se raccorde tangentiellement à ceux-ci.

Ces modifications ont pour effet d'une part de positionner les points de contact des deux profils, lors de l'application du couple, près des extrémités extérieures des cannelures, ce qui augmente le couple transmis, et d'autre part d'améliorer la transmission du couple du carré normalisé 14 au profil femelle, comme expliqué dans le FR-A-2 560 099.

La variante de la Figure 7 ne diffère de celle de la Figure 6 que par le remplacement des arcs 13A par de courts segments de droite 13B reliés tangentiellement aux arrondis 13 et formant un angle α de quelques degrés avec les segments 6, auxquels ils se raccordent par des arêtes 13C. Cette variante, de nouveau, améliore la transmission du couple du carré mâle normalisé 14 au profil femelle.

En variante encore, les cannelures 5 et/ou les segments 6 peuvent être dissymétriques par rapport aux deux sens de rotation, par exemple en combinant deux des variantes décrites ci-dessus.

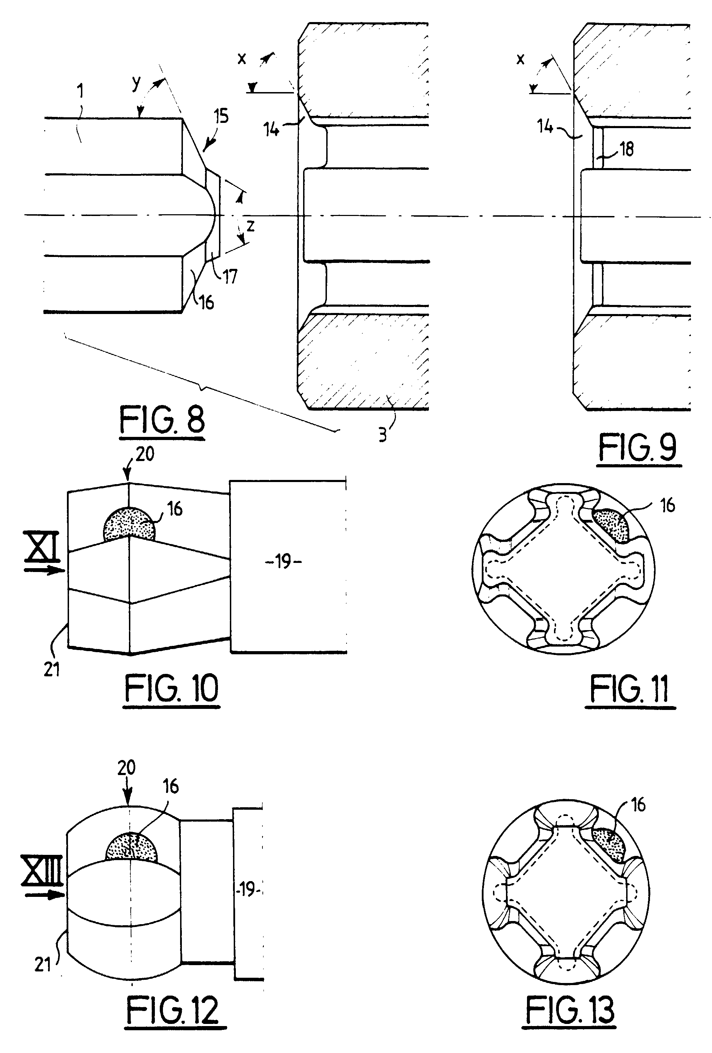

On a représenté à la Figure 8 les extrémités adjacentes de deux pièces comportant respectivement un profil mâle et un profil femelle conjugués conformes à l'invention, ces deux pièces pouvant en particulier être l'embout mâle 1 et la douille 3 de la Figure 2.

On a muni l'extrémité proximale de la douille d'un chanfrein 14, dont l'angle x est par exemple de 60° par rapport à l'axe de la douille.

Quant à l'embout 1, il comporte, à son extrémité distale, un nez 15 constitué de deux troncs de cône successifs : un tronc de cône proximal 16, d'angle y de l'ordre de 70° par rapport à l'axe de l'embout, puis un tronc de cône d'extrémité 17, d'angle d'ouverture z plus faible, de l'ordre de 90°.

La distance entre plats du carré normalisé correspondant, c'est-à-dire la distance séparant deux segments 6 opposés sur la Figure 1, est comprise entre le plus petit diamètre et le plus grand diamètre du tronc de cône 17. Par suite, les quatre évidements du profil mordent dans le tronc de cône 17, à peu près jusqu'à mi-longueur de celui-ci.

Cet agencement permet de guider l'introduction de la pièce mâle dans la pièce femelle d'une manière particulièrement commode pour l'utilisateur.

En variante (Figure 9), le chanfrein 14 peut être raccourci à partir de la tranche d'extrémité proximale de la douille 3, et être suivi d'un second chanfrein 18 ayant un angle d'ouverture plus faible.

Les Figures 10 et 11 illustrent l'application de l'invention à une rallonge dite "rallonge angulaire", qui autorise, après son introduction dans l'élément femelle et son verrouillage axial par la bille ou le plongeur de verrouillage chargé par un ressort, un certain débattement angulaire autour du diamètre passant par l'axe central de cet organe de verrouillage.

Ainsi, l'extrémité distale de la rallonge, en saillie au-delà de son manche 19, comporte un profil mâle tel que défini précédemment, dont les dimensions augmentent progressivement, de façon homothétique, du manche 19 à une section 20 d'aire maximale, correspondant à celle de l'élément femelle, puis diminue progressivement jusqu'à la tranche d'extrémité distale 21 de la rallonge.

Dans l'exemple des Figures 10 et 11, l'augmentation et la réduction des dimensions se font de manière linéaire. Au contraire, dans l'exemple des Figures 12 et 13, elles s'effectuent de manière bombée, conférant à l'extrémité de la rallonge la forme générale d'une boule tronquée.

On a également schématisé sur les Figures 10 à 13 la partie visible d'une bille 16 de verrouillage portée par le profil mâle entre deux de ses cannelures.

## Revendications

1. Profil cannelé d'accouplement séparable entre une pièce mâle (1) et une pièce femelle (3) qui appartiennent notamment à un outil d'entraînement en rotation d'une vis ou d'un écrou, le profil étant prévu sur la pièce femelle, le profil étant sensiblement constant sur toute la hauteur utile d'au moins la pièce femelle, caractérisé en ce que ledit profil cannelé comprend en alternance :
- quatre segments de droite (6) radialement intérieurs, l'ensemble de ces segments de droite étant adapté pour circonscrire un carré d'entraînement normalisé (14); et
- dans les coins dudit carré, quatre cannelures (5) en saillie radiale vers l'extérieur par rapport au contour dudit carré et dont les bords (11; 11A) sont orientés à peu près radialement;
- les extrémités des segments de droite (6) étant reliées aux bords (11; 11A) des cannelures par des arrondis (13).

2. Profil cannelé suivant la revendication 1, caractérisé en ce que ledit profil est prévu sur les deux pièces (1, 3).

3. Profil cannelé suivant la revendication 2, caractérisé en ce que ledit profil est sensiblement constant sur toute la hauteur utile de chacune des deux pièces.

4. Profil cannelé suivant l'une quelconque des revendications 1 à 3, caractérisé en ce que la pièce femelle (3) comporte, dans l'une au moins de ses faces planes correspondant aux segments de droite (6), un évidement (15) de réception d'un organe de verrouillage (16) chargé par un ressort, porté par une face plane du profil mâle conjugué ou dudit carré normalisé (14).

5. Profil cannelé suivant l'une quelconque des revendications 1 à 4, caractérisé en ce que chaque arrondi (13) du profil femelle est relié au segment de droite (6) adjacent par l'intermédiaire d'un second arrondi (13A) de rayon (R) nettement supérieur qui se raccorde tangentiellement au premier arrondi (13) et au segment de droite (6).

6. Profil cannelé suivant l'une quelconque des revendications 1 à 5, caractérisé en ce que chaque arrondi (13) du profil femelle est relié au segment de droite (6) adjacent par l'intermédiaire d'un second segment de droite (13B) raccordé tangentiellement audit arrondi (13) et raccordé par une arête (13C) au premier segment de droite (6), avec lequel il forme un angle (α) de quelques degrés.

7. Profil cannelé suivant l'une quelconque des revendications 1 à 6, caractérisé en ce que les cannelures (5) sont délimitées latéralement par des bords en forme de segments de droite (11) ou d'arcs de cercle (11A; 11B) d'orientation à peu près radiale, qui se raccordent tangentiellement, via des arrondis de liaison (12, 13), aux parties adjacentes du profil.

8. Profil cannelé suivant la revendication 7, caractérisé en ce que les bords (11; 11A; 11B) de chaque cannelure (5) ont une direction générale sensiblement radiale par rapport au centre (O) du profil.

9. Profil cannelé suivant l'une quelconque des revendications 1 à 8, caractérisé en ce que les cannelures (5) sont délimitées extérieurement par des arcs de cercle (8) appartenant à des cercles (9) dont les centres (0, 01, 02) sont situés sur les axes généraux de symétrie des cannelures correspondantes.

10. Profil cannelé suivant l'une quelconque des revendications 1 à 9, caractérisé en ce que les médiatrices des segments de droite (6) passent par le centre (O) du profil.

11. Profil cannelé suivant l'une quelconque des revendications 1 à 10, caractérisé en ce que chaque segment de droite (6) de la pièce femelle (3) comporte un creux (6A) dans sa partie centrale, sur tout ou partie de sa longueur.

12. Profil cannelé l'une quelconque des revendications 1 à 11, caractérisé en ce que le profil cannelé est symétrique par rapport aux deux sens de rotation.

13. Profil cannelé suivant l'une quelconque des revendications 1 à 12, caractérisé en ce que le profil cannelé est dissymétrique par rapport aux deux sens de rotation.

14. Outil d'entraînement en rotation d'une vis ou d'un écrou, manuel ou énergisé, comprenant une première pièce (1) adaptée pour recevoir un couple moteur, et au moins une deuxième pièce (3) de transmission du couple moteur de la première pièce à la vis ou à l'écrou (10), cette deuxième pièce présentant un profil cannelé tel que défini dans l'une quelconque des revendications 1 à 13, la première pièce présentant, aux jeux fonctionnels près, un profil d'entraînement cannelé conjugué de celui de la deuxième pièce.

15. Outil d'entraînement suivant la revendication 14, caractérisé en ce que le profil cannelé mâle a une section croissante jusqu'à celle du profil femelle puis décroissante, de façon bi-linéaire ou en boule.

16. Outil d'entraînement suivant la revendication 14 ou 15, caractérisé en ce que la pièce femelle (3) comporte un évasement d'entrée (14; 14, 18), tandis que la pièce mâle (1) comporte un nez (15) dont la partie arrière (16) est sensiblement tronconique et dont la partie avant (17) est sensiblement un tronc de cône moins ouvert et échancré sur une partie de sa longueur par les creux inter-cannelures du profil mâle, cette partie avant (17) étant adaptée pour s'emboîter partiellement dans la partie du profil femelle délimitée par les segments de droite (6).

17. Outil suivant l'une quelconque des revendications 14 à 16, caractérisé en ce que les deux profils cannelés ont des duretés voisines l'une de l'autre, notamment de l'ordre de 40 à 50 HRC.

## Patentansprüche

1. Trennbares Kupplungsrippenprofil zwischen einem eindringenden Teil (1) und einem eindringbaren Teil (3), die insbesondere zu einem Werkzeug zum Drehantreiben einer Schraube oder Mutter gehören, wobei das Profil zumindest auf dem eindringbaren Teil vorgesehen ist, wobei das Profil im wesentlichen über die gesamte Nutzungshöhe von zumindest dem eindringbaren Teil konstant ist, dadurch gekennzeichnet, daß das Rippenprofil aufeinanderfolgend aufweist:
- vier radial innenliegende gerade Segmente (6), wobei die Gesamtheit dieser geraden Segmente dazu ausgelegt ist, ein genormtes Antriebsvierkant (14) zu umschreiben, und
- in den Ecken des Vierkants vier Rippen (5) radial nach außen in bezug auf den Umriß des Vierkants und dessen Ränder (11; 11A) in etwa radial ausgerichtet sind,
- wobei die Enden der geraden Segmente (6) mit den Rändern (11; 11A) der Rippen durch Rundungen (13) verbunden sind.

2. Rippenprofil nach Anspruch 1, dadurch gekennzeichnet, daß das Profil auf beiden Teilen (1, 3) vorgesehen ist.

3. Rippenprofil nach Anspruch 2, dadurch gekennzeichnet, daß das Profil über die gesamte Nutzungshöhe von jedem der zwei Teile im wesentlichen konstant ist.

4. Rippenprofil nach einem der Ansprüche 1 bis 3, dadurch gekennzeichnet, daß das eindringbare Teil (3), in zumindest einer seiner ebenen Seiten in Übereinstimmung mit den geraden Segmenten (6) eine Vertiefung (15) zur Aufnahme eines federbelasteten Mitnahmeorgans (16) umfaßt, das durch die ebene Seite des komplementären eindringbaren Profils oder des normierten Vierkants (14) getragen ist.

5. Rippenprofil nach einem der Ansprüche 1 bis 4, dadurch gekennzeichnet, daß jede Rundung (13) des eindringbaren Profils mit dem geraden Segment (6) benachbart über die zweite Rundung (13A) mit deutlich größerem Radius (R) verbunden ist, die sich tangential an die erste Rundung (13) und an das gerade Segment (6) anschließt.

6. Rippenprofil nach einem der Ansprüche 1 bis 5, dadurch gekennzeichnet, daß jede Rundung (13) des eindringbaren Profils mit dem geraden Segment (6) benachbart über ein zweites gerades Segment (13B) verbunden ist, das sich an die Rundung (13) tangential und an das erste gerade Segment (6) über einen Anschlag (13C) anschließt, mit welchem es einen Winkel (α) von einigen Graden bildet.

7. Rippenprofil nach einem der Ansprüche 1 bis 6, dadurch gekennzeichnet, daß die Rippen (5) seitlich durch Ränder in Form von geraden Segmenten (11) oder Kreisbögen (11A; 11B) mit im wesentlichen radialer Ausrichtung begrenzt sind, die sich über die Verbindungsrundungen (12, 13) an benachbarte Teile des Profils anschließen.

8. Rippenprofil nach Anspruch 7, dadurch gekennzeichnet, daß die Ränder (11; 11A; 11B) jeder Rippe (5) eine in bezug auf das Zentrum (O) des Profils im wesentlichen radiale Richtung aufweisen.

9. Rippenprofil nach einem der Ansprüche 1 bis 8, dadurch gekennzeichnet, daß die Rippen (5) außen durch Kreisbögen (8) begrenzt sind, die zu Kreisen (9) gehören, deren Zentren (0, 01, 02) auf Hauptsymmetrieachsen der entsprechenden Rippen zu liegen kommen.

10. Rippenprofil nach einem der Ansprüche 1 bis 9, dadurch gekennzeichnet, daß die Mittensenkrechten der geraden Segmente (6) durch das Zentrum (O) des Profils verlaufen.

11. Rippenprofil nach einem der Ansprüche 1 bis 10, dadurch gekennzeichnet, daß jedes gerade Segment (6) des eindringbaren Teils (3) eine Eintiefung (6A) in seinem zentralen Abschnitt um seine gesamte Länge oder einen Teil derselben aufweist.

12. Rippenprofil nach einem der Ansprüche 1 bis 11, dadurch gekennzeichnet, daß das Rippenprofil relativ zu den beiden Drehrichtungen symmetrisch ist.

13. Rippenprofil nach einem der Ansprüche 1 bis 12, dadurch gekennzeichnet, daß das Rippenprofil relativ zu den beiden Drehrichtungen asymmetrisch ist.

14. Werkzeug zum manuellen oder motorisierten Drehantreiben einer Schraube oder Mutter, aufweisend ein erstes Teil (1), das dazu ausgelegt ist, ein Motordrehmoment aufzunehmen, und zumindest ein zweites Teil (3) zur Übertragung des Motordrehmoments vom ersten Teil auf die Schraube oder Mutter (10), wobei dieses zweite Teil ein Rippenprofil nach einem der Ansprüche 1 bis 13 aufweist, wobei das erste Teil mit geringem Funktionsspiel ein Antriebsprofil aufweist, das komplementär zu demjenigen des zweiten Teils ist.

15. Antriebswerkzeug nach Anspruch 14, dadurch gekennzeichnet, daß das eindringende Rippenprofil einen zunehmenden Querschnitt bis zu dem eindringbaren Profil und daraufhin einen abnehmenden Querschnitt in doppellinearer oder Kugelgestalt aufweist.

16. Antriebswerkzeug nach Anspruch 14 oder 15, dadurch gekennzeichnet, daß das eindringbare Teil (3) eine trichterförmige Zugangserweiterung (14; 14, 18) umfaßt, während das eindringende Teil (1) eine Nase (15) umfaßt, deren hinterer Abschnitt (16) im wesentlichen kegelstumpfförmig ist, und deren vorderer Abschnitt (17) im wesentlichen einen weniger offenen Kegelstumpf bildet und über einen Teil seiner Länge durch die eingetieften Zwischenrippen des eindringenden Profils ausgebogen verläuft, wobei dieser vordere Abschnitt (17) dazu dient, sich teilweise in das eindringbare Profil einzupassen, das durch die geraden Segmente (6) begrenzt ist.

17. Antriebswerkzeug nach einem der Ansprüche 14 bis 16, dadurch gekennzeichnet, daß die zwei Rippenprofile benachbart zueinander Härten in der Größenordnung von 40 bis 50 HRC aufweisen.

## Claims

1. Releasable, grooved coupling section between a male part (1) and a female part (3), more particularly belonging to a tool for rotating a screw or a nut, the section being provided on the female part, the section being substantially constant over the entire useful height of at least the female part, characterized in that said grooved section comprises in alternating manner:
- four radially inner, straight segments (6), all said straight segments being adapted so as to circumscribe a standard square drive (14) and
- in the corners of said square drive, four grooves (5) projecting radially towards the outside with respect to the contour of said square drive and whose edges (11,11A) are roughly radially oriented,
- the ends of the straight segments (6) being connected to the edges (11, 11A) of the grooves by rounds (13).

2. Grooved section according to claim 1, characterized in that said section is provided on both parts (1, 3).

3. Grooved section according to claim 2, characterized in that said section is substantially constant over the entire useful height of each of the two parts.

4. Grooved section according to any one of the claims 1 to 3, characterized in that the female part (3) has, in at least one of its planar faces corresponding to the straight segments (6), a recess (15) for receiving a spring-loaded, locking member (16), carried by a planar face of the combined, male section or said standard square drive (14).

5. Grooved section according to any one of the claims 1 to 4, characterized in that each round (13) of the female section is connected to the adjacent straight section (6) by means of a second round (13) with a much larger radius (R), which is tangentially connected to the first round (13) and to the straight segment (6).

6. Grooved section according to any one of the claims 1 to 5, characterized in that each round (13) of the female section is connected to the adjacent straight segment (6) by means of a second straight segment (13B) tangentially connected to said round (13) and connected by an edge (13C) to the first straight segment (6), with which it forms an angle (α) of a few degrees.

7. Grooved section according to any one of the claims 1 to 6, characterized in that the grooves (5) are laterally defined by edges in the form of straight segments (11) or circular arcs (11A, 11B) with a roughly radial orientation and which are tangentially connected, via connecting rounds (12, 13), to the adjacent portions of the section.

8. Grooved section according to claim 7, characterized in that the edges (11, 11A, 11B) of each groove (5) have a generally substantially radial direction with respect to the centre (0) of the section.

9. Grooved section according to any one of the claims 1 to 8, characterized in that the grooves (5) are externally defined by circular arcs (8) belonging to circles (9), whose centres (0, 01, 02) are located on the general axes of symmetry of the corresponding grooves.

10. Grooved section according to any one of the claims 1 to 9, characterized in that the midperpendiculars of the straight segments (6) pass through the centre (0) of the section.

11. Grooved section according to any one of the claims 1 to 10, characterized in that each straight segment (6) of the female part (3) has a hollow (6A) in its central portion, over all or part of its length.

12. Grooved section according to any one of the claims 1 to 11, characterized in that the grooved section is symmetrical with respect to the two rotation directions.

13. Grooved section according to any one of the claims 1 to 12, characterized in that the grooved section is asymmetrical with respect to the two rotation directions.

14. Tool for rotating a screw or a nut, in manual or powered form, comprising a first part (1) suitable for receiving a motor torque and at least one second part (3) for transmitting the motor torque from the first part to the screw or nut (10), said second part having a grooved section as defined in any one of the claims 1 to 13, the first part having, to within the operational clearances, a grooved drive section combined with that of the second part.

15. Drive tool according to claim 14, characterized in that the male grooved section has an increasing cross-section up to that of the female section and then a decreasing cross-section, in bilinear or ball form.

16. Drive tool according to claim 14 or 15, characterized in that the female part (3) has an intake widening (14; 14, 18), whilst the male part (1) has a nose (15), whose rear portion (16) is substantially truncated cone-shaped and whose front portion (17) is substantially truncated cone-shaped, but less open and indented over a portion of its length by inter-groove hollows of the male section, said front portion (17) being suitable for partly fitting in the portion of the female section defined by the straight segments (6).

17. Tool according to any one of the claims 14 to 16, characterized in that tile two grooved sections have similar hardnesses, particularly approximately 40 to 50 HRC.
